# FASCICULE DE BREVET EUROPEEN

(11) **EP 1 209 108 B1**
(45) Date de publication et mention de la délivrance du brevet: **17.12.2003**
(21) Numéro de dépôt: 01402798.1
(22) Date de dépôt: 29.10.2001
(51) Int. Cl.: B65H 19/18

(54) **Procédé de raccordement de deux gaines dans une machine de manchonnage pour appliquer les manchons sur des bouteilles et machine de manchonnage pour la mise en oeuvre de ce procédé**
Verfahren zum Verbinden zweier Rollen in einer Hüllmaschine zum Aufbringen von Hüllen auf Flaschen und Hüllmaschine zur Ausführung des Verfahrens
Method of splicing two rolls in a sleeving machine to apply sleeves onto bottles and sleeving machine to carry out this method

(30) Priorité: 30.10.2000 FR 0013913
(43) Date de publication de la demande: 29.05.2002
(73) Titulaire: PROTECTION DECORATION CONDITIONNEMENT EUROPE S.A., 80500 Montdidier (Somme) (FR)
(72) Inventeur: Vandevoorde, Jean-Claude, 80500 Montdidier (FR)
(74) Mandataire: Cabinet HERRBURGER

(56) Documents cités:
- EP-A- 0 758 621
- EP-A- 0 790 205
- DE-A- 3 119 109
- GB-A- 2 081 217
- US-A- 4 555 281

## Description

La présente invention concerne un procédé d'assemblage de deux gaines dans une machine de manchonnage de bouteilles et la machine de manchonnage pour la mise en oeuvre de ce procédé. Un tel procédé et la machine correspondante sont décrits dans la demande d'un brevet européen EP 0 758 621.

L'invention concerne plus particulièrement un procédé d'assemblage dans une machine de manchonnage de l'extrémité aval d'une gaine à manchons dévidée d'une bobine qui se termine, à l'extrémité amont de la gaine d'une nouvelle bobine, pour réaliser une jonction continue respectant le pas de la succession des manchons sans décalage, la gaine étant encore à l'état plat.
L'invention concerne également une machine de manchonnage pour la mise en oeuvre du procédé selon l'une quelconque des revendications 1 à3 comprenant :
- un poste de manchonnage pour appliquer des manchons détachés d'une gaine sur des bouteilles,
- une alimentation en manchons sous la forme d'une gaine comprenant :
   * un emplacement de bobine avec une bobine à manchons qui se dévide,
   * un emplacement de bobine de rechange, avec une bobine en attente, destinée à être reliée à l'extrémité aval de la bobine qui se dévide, au moment où celle-ci sera terminée,
   * une réserve tampon pour permettre la poursuite du fonctionnement du poste de manchonnage pendant l'assemblage de l'extrémité amont et de l'extrémité aval de la gaine de la bobine nouvelle et de la bobine terminée,
- un poste d'assemblage pour relier l'extrémité aval à l'extrémité amont.

La présente invention concerne la technique du manchonnage de bouteilles. Il s'agit d'un substitut d'étiquette en forme de manchon étirable ou rétractable, qui est placé sur le corps de la bouteille et tient lieu d'étiquette. Ce manchon est placé sur la bouteille par une machine de manchonnage qui comporte une alimentation en manchons formée par une bobine d'une gaine de manchons en continu. Cette gaine est débitée en manchons qui sont ensuite ouverts et placés sur les bouteilles. La machine repère la position des manchons pour couper ceux-ci à la bonne dimension et éviter que, par suite de décalage inévitable lié à l'élasticité plus ou moins grande de la matière, la machine ne se dérègle et ne se déphase par rapport à la succession des manchons.

Les bobines de gaine à manchons ont des tailles permettant leur manipulation. La longueur de gaine d'une bobine correspond, en général, à un fonctionnement d'une machine de manchonnage à débit moyen pendant 20 à 30 minutes. Puis lorsque la gaine est épuisée, on dévide une nouvelle bobine. Pour éviter d'arrêter la machine de manchonnage, on assemble actuellement l'extrémité aval, c'est-à-dire l'extrémité arrière, de la gaine qui se termine, à l'extrémité amont, c'est-à-dire l'extrémité avant, de la gaine d'une nouvelle bobine. Cet assemblage doit respecter le pas des manchons pour ne pas décaler les manchons dans la machine et risquer que ceux-ci ne soient coupés de manière déphasée, correspondant toujours à une longueur de manchon mais avec deux images partielles du manchon.

Pour éviter ce défaut que la machine de manchonnage ne permet de corriger, il est indispensable que la jonction des deux gaines soit faite en phase en respectant précisément le pas des manchons sur les gaines.

Pour cela, actuellement on applique l'extrémité aval et l'extrémité amont l'une sur l'autre en les superposant exactement suivant le dessin du manchon puis on coupe simultanément les deux extrémités pour réaliser une ligne de jonction. Les parties coupées des deux gaines sont enlevées et on colle par des rubans adhésifs les deux gaines mises bout à bout et respectant exactement le pas des manchons.

Cette opération faite manuellement, qui ressemble à l'assemblage de films cinématographiques, nécessite un certain temps. Pour éviter d'arrêter la machine de manchonnage, qui travaille en général en cinématique continue, on a une réserve tampon constituée par plusieurs boucles de gaine. Cette réserve est pleine lorsque la gaine se dévide normalement. A la fin de la gaine, l'extrémité finissante est bloquée et sous l'effet de la tension ou de la demande de gaine par le poste de manchonnage, la réserve tampon s'épuise progressivement.

Comme pour des raisons d'encombrement et de coût, cette réserve tampon ne permet pas de fournir le nombre de manchons nécessaire au débit normal demandé par le poste de manchonnage, on fait tourner ce poste à vitesse réduite pour disposer de suffisamment de réserve pour la durée de l'opération d'assemblage ;il est préférable pour la dynamique de l'ensemble de l'opération de manchonnage de faire tourner le poste de manchonnage à vitesse réduite plutôt que d'arrêter et de redémarrer.

En effet, il est plus facile de diminuer ou d'augmenter la vitesse de fonctionnement de la machine de manchonnage, c'est -à-dire notamment l'arrivée et la sortie de bouteilles, plutôt que d'arrêter complètement la machine et de la redémarrer à partir d'une vitesse nulle.

Mais ce procédé d'assemblage des gaines bout à bout est une opération manuelle, trop longue pour les rendements exigés des machines de manchonnage actuelles, en particulier du fait de l'accroissement des rendements des machines d'embouteillage qui se trouvent en amont.

La présente invention a pour but de développer un procédé permettant de simplifier l'assemblage de deux gaines à manchons tout en respectant parfaitement la précision de cet assemblage, ainsi que de réaliser une machine simple pour la mise en oeuvre de ce procédé, pour arriver à un fonctionnement pratiquement automatique.

A cet effet, l'invention concerne un procédé d'assemblage du type défini ci-dessus caractérisé en ce que
- on coupe l'extrémité aval EAV de la gaine G0 qui se termine suivant une ligne de jonction LJ déterminée par rapport à un manchon M04,
- on installe l'extrémité amont EAM de la gaine nouvelle G1 à côté de l'extrémité aval EAV de la gaine terminée G0,
- on prépare cette extrémité amont EAM en séparant un volet supérieur V1 et un volet inférieur V2 par découpe des deux côtés LCB1, LCB2 de l'extrémité amont EAM,
- on ouvre les volets V1, V2,
- on glisse l'extrémité amont EAM avec ses volets V1, V2 ouverts à cheval sur l'extrémité aval EAV, tenue à plat,
- on positionne l'extrémité amont EAM par rapport à la ligne de jonction LJ à l'extrémité aval EAV pour respecter le pas P des manchons,
- on solidarise les volets V1, V2 à l'extrémité aval EAV.

Ce procédé permet un assemblage très rapide puisque la ligne de jonction de l'extrémité aval de la gaine est définie de manière précise et de préférence identique pour un même type de manchon. Comme cette ligne est définie, l'opérateur peut ainsi découper les deux côtés de l'extrémité amont de la nouvelle gaine jusqu'à cette même ligne de jonction sur le premier manchon de cette extrémité. Puis, cette extrémité est positionnée de manière précise à cheval sur l'extrémité aval et est assemblée, par exemple, par des rubans adhésifs. L'ensemble de l'opération ne dure qu'une fraction du temps de l'opération d'assemblage traditionnel ce qui permet d'éviter de ralentir la machine de manchonnage, la réserve de manchons dans la réserve tampon étant suffisante pour la durée d'arrêt servant à l'assemblage. Lorsque la gaine est ainsi assemblée, on débloque l'extrémité « aval » et la nouvelle gaine se dévide. A ce moment, la réserve tampon se reconstitue progressivement.
La présente invention concerne également une machine de manchonnage avec assemblage automatique des deux gaines, cette machine du type défini ci-dessus étant caractérisée en ce que le poste d'assemblage comprend :
- un dispositif de guidage en sortie de poste d'assemblage, en amont de la réserve tampon, ayant :
   * un guide flottant composé d'une plaque tenue par une olive,
      ** la plaque rectangulaire ayant sensiblement la largeur de la gaine à plat,
      ** cette plaque étant solidaire de l'olive munie de galets et maintenue en flottement entre deux cylindres entraînés à la vitesse de défilement de la gaine ou susceptible d'être arrêtés,
      ** des galets latéraux pour tenir les côtés de la plaque,
      ** le guide flottant étant logé dans la gaine qui défile autour de lui, entraînée par les cylindres et les galets,
   * un capteur repérant la position des manchons sur la gaine pour commander l'arrêt de l'extrémité aval de la gaine dans une position précise par rapport à un manchon,
   * le guide flottant tenant à plat l'extrémité aval de la gaine terminée et la bloquant en défilement pendant l'assemblage,
- un dispositif d'assemblage situé en amont du dispositif de guidage comprenant
   * un plateau de positionnement de l'extrémité amont, située à côté de la partie d'alignement sur la ligne de défilement de la gaine, pour recevoir l'extrémité amont préparée,
   * un châssis mobile en translation entre une position alignée sur la ligne de défilement de la gaine, définie par le dispositif de guidage et une position latérale de dégagement, au niveau du plateau pour prendre l'extrémité amont positionnée par rapport au plateau,
      ** ce châssis portant deux plaques de préhension, commandées pour prendre les volets de l'extrémité amont et les écarter,
      ** deux mâchoires de liaison,
      ** un actionneur pour transférer le châssis entre sa position dégagée et sa position engagée avec l'extrémité amont ouverte venant au-dessus et en dessous de l'extrémité aval, pour rabattre les deux volets contre l'extrémité aval et appliquer les mâchoires de liaison contre les volets, pour les fixer contre l'extrémité aval, ainsi que pour commander le mouvement de retour et de dégagement des actionneurs, des mâchoires de liaison et du châssis.

La présente invention sera décrite ci après de manière plus détaillée à l'aide des dessins annexés dans lesquels :
- la figure 1 montre schématiquement les différentes phases A, B, C d'assemblage de deux extrémités de gaine dans une machine de manchonnage.
- la figure 2 est une vue de face d'un mode de réalisation d'une machine de manchonnage au niveau des moyens d'assemblage de gaine.
- la figure 3 est une vue de dessus de la machine.
- la figure 4 est une vue de gauche de la machine de la figure 2.
- la figure 5 est une vue de face partiellement coupée, à échelle agrandie du dispositif de guidage.
- la figure 6 est une vue en coupe selon VI-VI de la figure 5.
- la figure 7 est une vue de dessus du poste d'assemblage.
- la figure 8 est une vue en coupe verticale transversale partielle du dispositif d'assemblage.
- la figure 9 est une vue en coupe longitudinale du poste d'assemblage.
- la figure 10 est une autre vue en coupe transversale du poste d'assemblage.

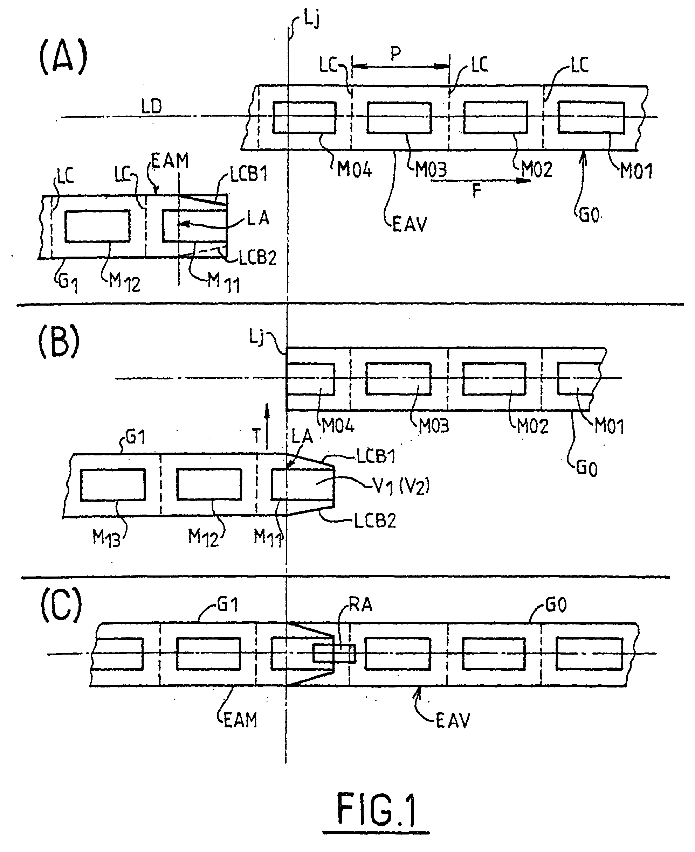

La figure 1 montre schématiquement les différentes étapes du procédé d'assemblage de deux gaines selon l'invention. Ce procédé se compose de trois opérations figurées dans les parties (A), (B), (C) de la figure 1. Ces différents schémas se correspondent dans la direction verticale selon une ligne de référence appelée ligne de jonction LJ.

La gaine circule dans la machine de manchonnage selon la ligne de défilement LD dans le sens de la flèche F. Lorsque la bobine est terminée, apparaît l'extrémité arrière de la gaine G0 en cours d'utilisation. Cette extrémité arrière EAV est appelée par définition extrémité aval et, selon la même convention, l'extrémité avant EAM de la gaine G1 que l'on veut assembler à cette gaine G0 est appelée extrémité amont.

Chaque gaine est un tube, enroulé à plat et constituant une succession de manchons M01, M02, M03, M11, M12. Ces manchons sont correspondent à une étiquette et portent des indications, dessins, logos etc, figurés par un rectangle.

Tous les manchons sont identiques puisqu'en principe destinés à habiller des bouteilles identiques de même contenant. Ces manchons sont séparés par une ligne de coupure LC, matérialisée soit par un pointillé pour permettre l'arrachage des manchons dans la partie de la machine de manchonnage en aval, soit par des lignes réelles ou théoriques figurant simplement la futur ligne de coupe.

La longueur d'un manchon P correspond au pas des manchons dans chaque gaine.

Sur le dessin, on a représenté une ligne de repère LJ ou ligne de jonction. Cette ligne constitue le repère par rapport auquel se définit la jonction entre l'extrémité aval EAV et l'extrémité amont EAM.

Ces définitions étant données, selon la présente invention (figure 1A), lorsque apparaît l'extrémité aval EAV d'une gaine G0 qui se termine, on arrête le défilement de cette extrémité EAV de la gaine après avoir détecter la position des manchons de manière à placer la ligne de jonction LJ. Puis on coupe la partie de la gaine G0 qui se trouve en amont de la ligne de jonction LJ après ce positionnement.

Cette ligne LJ peut correspondre à une ligne de coupure LC entre deux manchons. Il peut également s'agir d'une ligne positionnée différemment.

En fait, le positionnement de la gaine G0 par rapport à la ligne de jonction LJ se fait par détection des manchons M0, M1 ... et leur repérage par rapport à la ligne LJ pour arrêter le défilement de l'extrémité EAV de façon à mettre cette ligne (tracée ou théorique) sur la ligne de jonction LJ.

Pendant cet arrêt de l'extrémité aval EAV de la gaine G0, la machine de manchonnage continue de fonctionner en épuisant la réserve tampon constituée pendant le fonctionnement normal, comme cela apparaîtra à la lecture de la description de la machine de manchonnage faite ci-après.

La coupure selon la ligne LJ est de préférence automatique.

Après ce positionnement, on prépare l'extrémité amont EAM de la gaine suivante G1. Pour cela, on coupe les bords de l'extrémité EAM suivant une double ligne de coupe en biais LCB1, LCB2, ces deux lignes étant de préférence mais non nécessairement symétriques. En coupant ainsi les coins par les lignes LCB1, LCB2, on forme deux volets trapézoïdaux V1, V2 situés respectivement sur le « dessus » et sur le « dessous » de la gaine et dont la base est une ligne d'assemblage LA.

Après cette préparation et enlèvement des parties coupées, l'extrémité aval EAV et l'extrémité amont EAM se trouvent dans la situation représentée à la figure 1B.

Dans la troisième phase (figure 1C), on translate l'extrémité EAM dans la direction de la flèche T, pour faire chevaucher les volets V1, V2, ouverts sensiblement suivant une forme de V sur l'extrémité EAV, maintenue à plat et en plaçant la ligne d'assemblage de la gaine G1 sur la ligne de jonction LJ, la ligne d'assemblage étant positionnée ou fixée sur la gaine G1 dans une position homologue de la ligne de jonction LJ définie sur la gaine G0 pour respecter le pas des manchons et ne pas créer de déphasage entre les manchons des deux gaines G0, G1 ainsi assemblées Le choix de la jonction des lignes LJ, LA par rapport à un manchon se fait en principe de manière quelconque mais toujours homologue sur les deux gaines. En pratique, ces lignes sont positionnées sur un repère non défini sur le manchon. Puis après avoir ainsi placé les deux volets, on fixe les deux extrémités en collant, par exemple, des rubans adhésifs RA sur la jonction ainsi faite.

Il est à remarquer que pour le positionnement de l'extrémité amont EAM, on se repère par rapport à la ligne de jonction LJ.

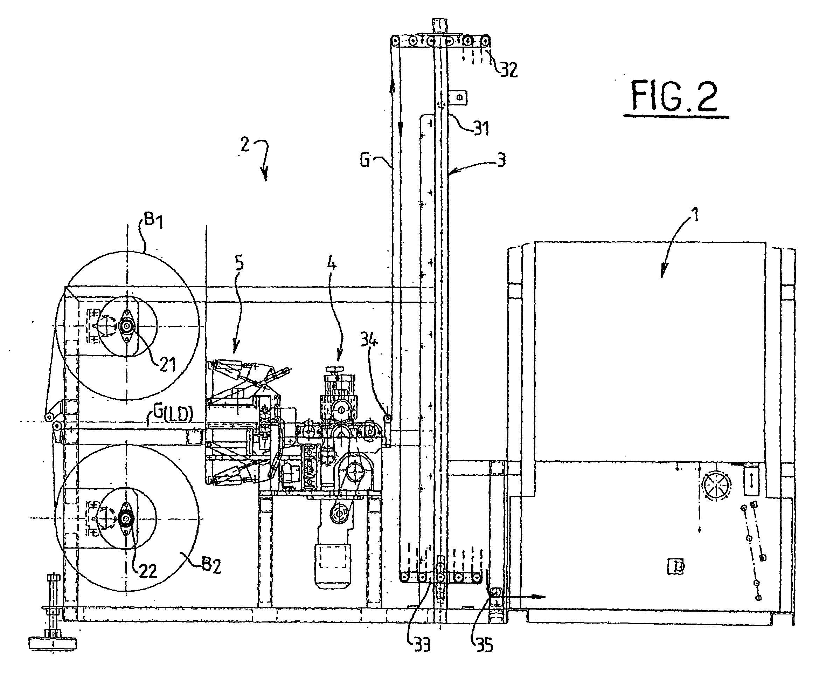

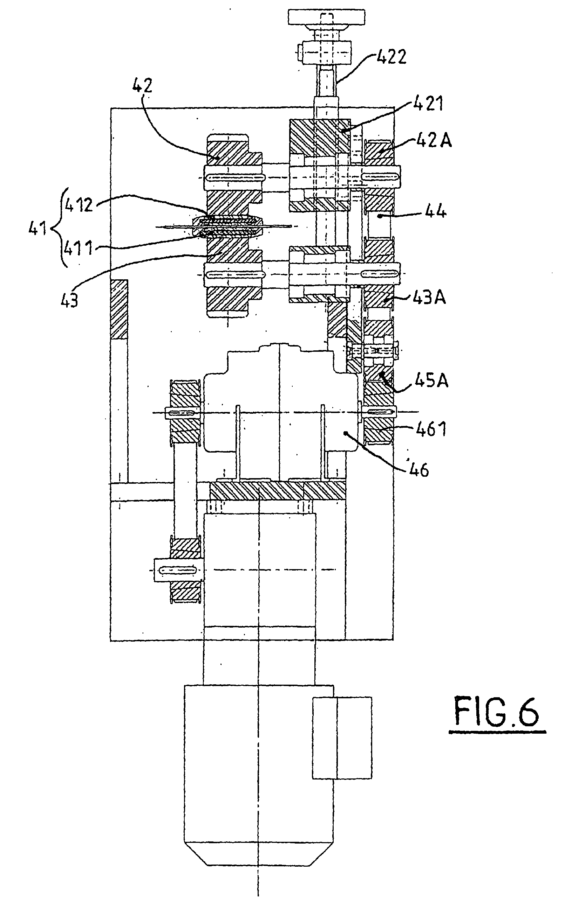

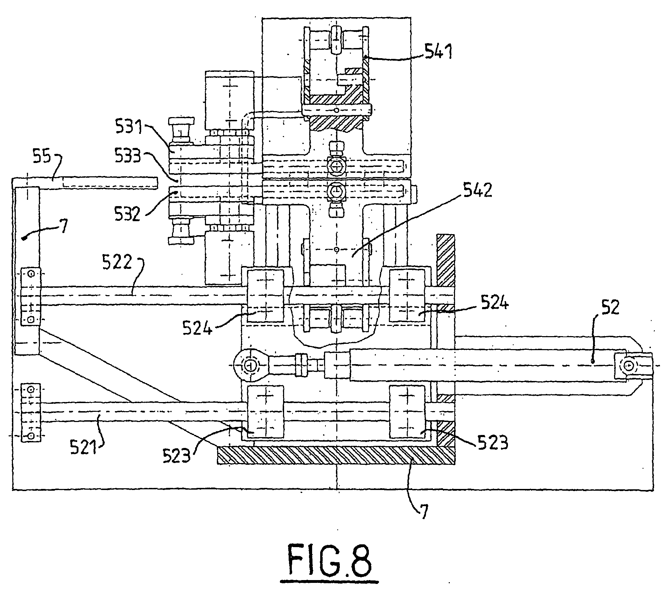

Une machine pour la mise en oeuvre de ce procédé sera décrite ci-après à l'aide des figures 2 à 10.

La figure 2 montre une machine de manchonnage selon l'invention composée d'un poste de manchonnage 1, schématisé simplement par un rectangle. Dans ce poste de manchonnage arrivent des bouteilles à manchonner ainsi que les manchons pour être enfilés sur les bouteilles.

Les manchons proviennent d'une gaine fournie par une alimentation en manchons 2. Cette alimentation 2, est reliée au poste de manchonnage 1 par l'intermédiaire d'une réserve tampon 3 formée d'un châssis 31 portant en partie supérieure un ensemble de rouleaux 32, d'axe fixe mais libre en rotation et en partie inférieure, un équipage mobile 33 formé également de rouleaux. La gaine G, d'où seront découpés les manchons, décrit un chemin en passant alternativement sur un rouleau supérieur et un rouleau inférieur et ainsi de suite, entre le rouleau de départ 34 à la sortie de l'alimentation en manchons 2 et le rouleau 35 à l'entrée du poste de manchonnage.

L'équipage 33 est simplement soumis à une charge de façon à tendre la gaine G. Dès que la traction sur la gaine, au-delà du rouleau 35, augmente, cette augmentation est compensée par une augmentation du débit de gaine qui, si l'entrée de la réserve tampon 3 est bloquée ou si elle est inférieure à ce débit demandé, se traduit par une consommation de longueur de gaine de la réserve 3 faisant remonter l'équipage 33.

Dans les conditions de fonctionnement normales, puisque la gaine fournie par l'alimentation est débitée selon un débit constant identique à la consommation de gaine dans le poste de manchonnage, la longueur de gaine stockée dans les différents brins de la réserve tampon 3 reste constante.

Ce n'est que si par exemple l'alimentation est arrêtée à la fin d'une bobine, pour l'accrochage de l'extrémité avant de la gaine de la bobine suivante, que l'alimentation ne débite plus pendant un court instant et à ce moment la gaine est prise dans la réserve tampon 3.

Pour simplifier le dessin, les différents brins de la gaine dans la réserve 3 n'ont pas été représentés.

L'alimentation en manchons 2 d'une gaine G se compose d'un emplacement de bobine 21 formé d'un support avec un axe non détaillés, portés par le bâti de la machine et recevant une bobine B1. Cette bobine est en cours de dévidage.

L'alimentation comprend également un second emplacement de bobine 22 dans lequel est placée une bobine B2 en attente. Dès que la bobine B1 est épuisée, on assemble l'extrémité de la gaine de la bobine B2 pour continuer l'alimentation du poste de manchonnage.

Entre les emplacements 21, 22 et la réserve tampon 3, le poste d'assemblage 2 comprend un dispositif de guidage 4 et un dispositif d'assemblage 5.

Le dispositif de guidage 4 est destiné à guider et à positionner l'extrémité aval de la gaine qui se termine et à présenter cette extrémité pour permettre l'assemblage précis avec l'extrémité amont de la gaine qui prendra la suite. Cette extrémité amont est préparée et positionnée par le dispositif d'assemblage 5.

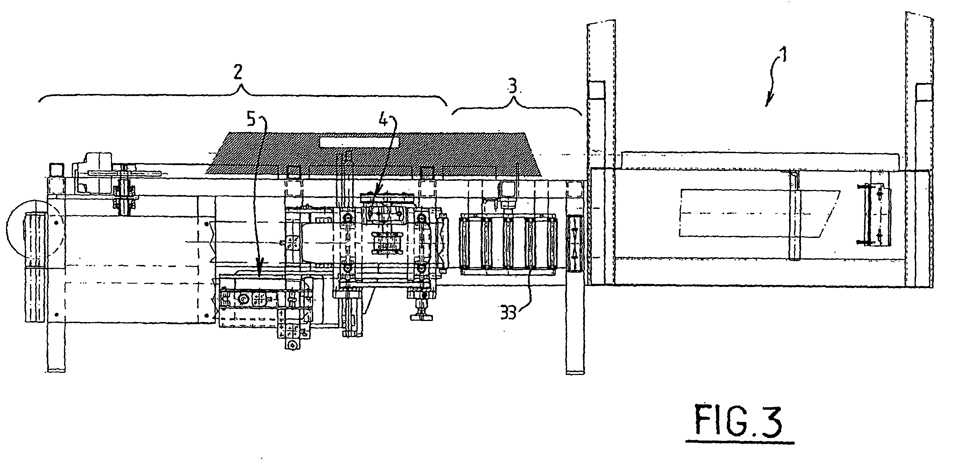

La figure 3 montre plus particulièrement ces différents moyens en vue de dessus et notamment la réserve tampon 3 avec son équipage mobile 33 (le support fixe 32 en partie haute étant supprimé dans cette figure), le poste d'assemblage avec le dispositif de guidage 4 et en partie le dispositif d'assemblage 5.

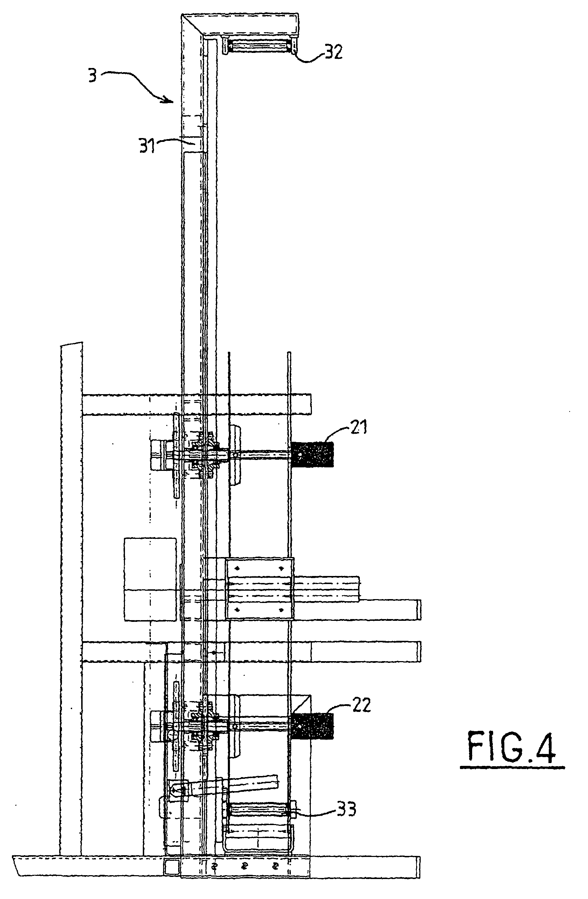

La figure 4 montre plus particulièrement les supports de bobine 21, 22 ainsi que la réserve tampon 3.

Les différentes parties de la machine de manchonnage seront détaillées ci-après.

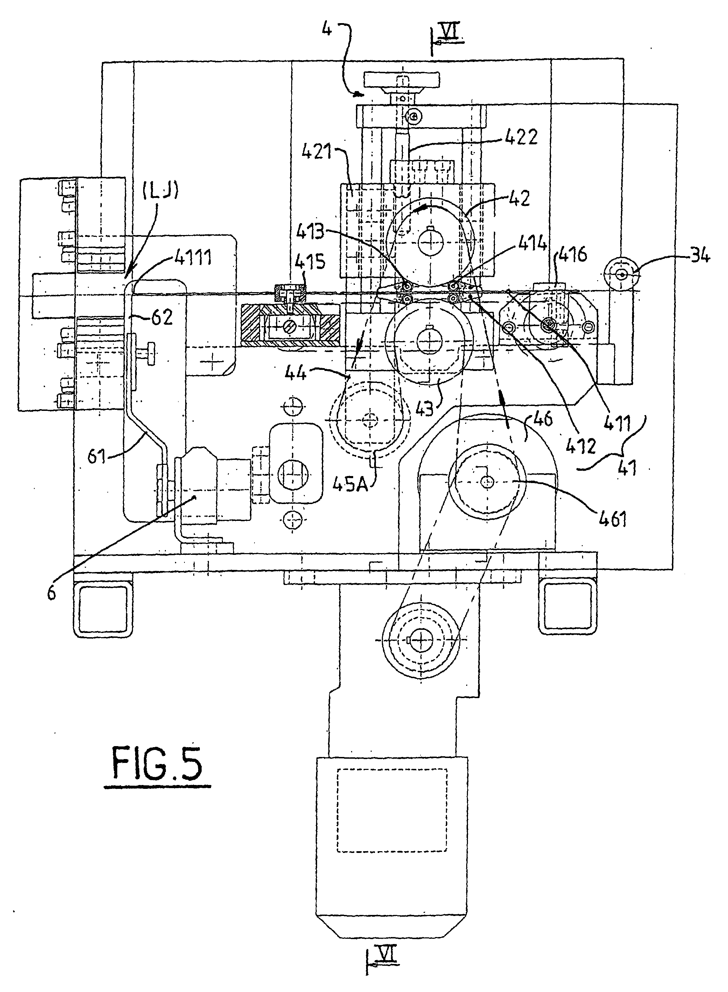

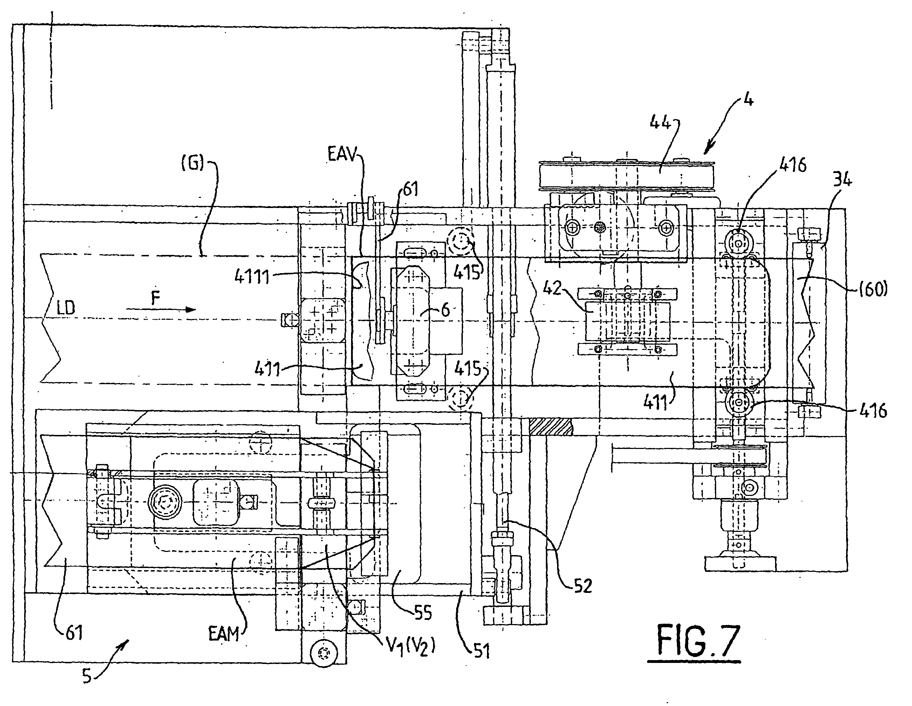

Selon les figures 5, 6, 7 le dispositif de guidage 4 comprend un guide flottant 41 composé d'une plaque 411 et d'une olive 412. La plaque 411 de forme sensiblement rectangulaire (figure 7) est pincée entre les deux parties de l'olive 412 ayant un contour en forme de navette.

Cette olive 412 comporte deux paires de rouleaux 413, 414 destinés à coopérer avec deux cylindres 42, 43 entraînés en synchronisme. Ces cylindres 42, 43 sont portés par des arbres munis de poulies 42A, 43A par une courroie 44 passant sur un cylindre de renvoi 45 et sur la sortie d'un moteur 46. L'olive 412 est maintenue flottante entre les deux cylindres 42, 43. Pour sa mise en place, l'arbre du cylindre supérieur 42 est monté dans un palier porté par sur un chariot 421 commandé ou réglable en hauteur par l'intermédiaire d'un mécanisme à vis 422. Ce mécanisme permet de relever le cylindre supérieur 42 pour ouvrir l'intervalle par rapport au cylindre inférieur 43 et permettre l'extraction de l'olive 412 ou sa mise en place.

Cet organe de guidage 41 est également guidé latéralement par des galets latéraux 415, 416 prévus de part et d'autre du chemin de défilement, défini par la plaque 411 et l'olive 412.

En fait, le guide flottant 41 se place à l'intérieur de la gaine et celle-ci passe par-dessus le guide dans l'intervalle entre les galets 413, 414 de l'olive 412 et les deux cylindres 42, 43 ainsi que dans l'intervalle entre les bords latéraux de la plaque 411 et les galets de guidage latéraux 415, 416.

La plaque 411 se prolonge vers le côté amont, au-delà du galet 415 jusqu'à son bord 41 11 qui coïncide avec la ligne de jonction LJ (voir figure 1). Pour mettre en place la gaine au début d'une opération, il faut introduire le guide flottant 41 dans l'ouverture de la gaine, puis placer l'ensemble à cheval entre les deux cylindres 42, 43.

En amont du dispositif de guidage 4 décrit ci-dessus, ou plus exactement en dessous de son extrémité amont se trouve un actionneur 6 en forme de vérin pivotant portant un bras 61 muni d'un couteau 62. Ce couteau 62 est aligné sur le bord 41 11 de la plaque de guidage 411 pour couper l'extrémité aval de la gaine qui se termine. Ce vérin 6 est commandé en fonction d'un moyen de repérage des manchons sur la gaine pour couper la gaine suivant la ligne d'assemblage LA (figure 1) correspondant à la ligne de jonction LJ.

Le repérage de la position des manchons sur la gaine se fait par un moyen de repérage non représenté, intégré au poste de guidage par exemple au niveau des galets latéraux 416 pour détecter précisément la position de chaque manchon sur la gaine et permettre ainsi de commander l'arrêt du défilement de la gaine en agissant sur le moteur 46 pour positionner précisément la ligne d'assemblage LA (figure 1) sur le bord arrière 41.11 de la plaque 411 et permettre la découpe précise de l'extrémité avale de la gaine qui se termine.

La figure 7 montre en vue de dessus certaines des parties du dispositif de guidage décrit ci-dessus et notamment les galets de guidage latéral 415, 416, la plaque 411 dont les coins sont arrondis pour ne pas blesser la gaine qui passe sur cette plaque. Il est à remarquer que la largeur de la plaque correspond sensiblement à la largeur de la gaine mise à plat c'est-à-dire lorsqu'elle est dévidée du rouleau.

La figure 7 montre la ligne de défilement LD de la gaine dans la direction F. En vue de dessus apparaît la gaine G0.

A gauche du dispositif de guidage se trouve le dispositif d'assemblage 5 représenté dans sa position dégagée, située à côté de ligne de défilement LD de la gaine G.

Selon les figures 7, 8, 9, le dispositif d'assemblage 5 se compose d'un châssis mobile en translation transversale par rapport à la direction de défilement F. Ce châssis 51 est commandé en translation par un vérin 52.

Le châssis 51 est monté sur des colonnes de guidage 521, 522, horizontales, portées par le bâti 7 sur lesquelles il glisse à l'aide des paliers 523, 524. Ce châssis porte deux plaques de préhension 531, 532 l'une au-dessus l'autre en dessous, mobiles verticalement et définissant entre elles une ouverture 533. Au-dessus des plaques de préhension (fonctionnant par aspiration) se trouvent deux mâchoires de liaison 541, 542, venant également l'une au-dessus l'autre en dessous d'un plan horizontal.

Le dispositif d'assemblage comprend également un plateau 55, fixe, situé dans la position dégagée latéralement par rapport à ligne de défilement LD. Ce plateau 55 reçoit l'extrémité amont EAM de la nouvelle gaine G1 comme cela est représenté schématiquement, une fois l'extrémité de cette gaine préparée (coupée). Lorsque l'extrémité EAM est ainsi placée sur le plateau, l'équipage mobile 51 vient à cheval sur le plateau 55 et l'aspiration créée dans la plaque de préhension supérieure 531 permet d'accrocher le volet supérieur (non représenté) de la gaine. Puis le vérin 52 commande la translation de l'équipage mobile et pendant ce mouvement les deux plaques de préhension 531, 532 s'écartent pour ouvrir les volets de la gaine G1 et faire ainsi passer par translation, cette ouverture des deux volets par-dessus le bord et l'extrémité aval EAV de la gaine G0, sur la plaque 411.

Après ce positionnement, les mâchoires 541, 542 s'abaissent et fixent les volets sur l'extrémité de la gaine.

Les mâchoires 541 peuvent déposer un ruban adhésif qui réalise l'assemblage par collage.

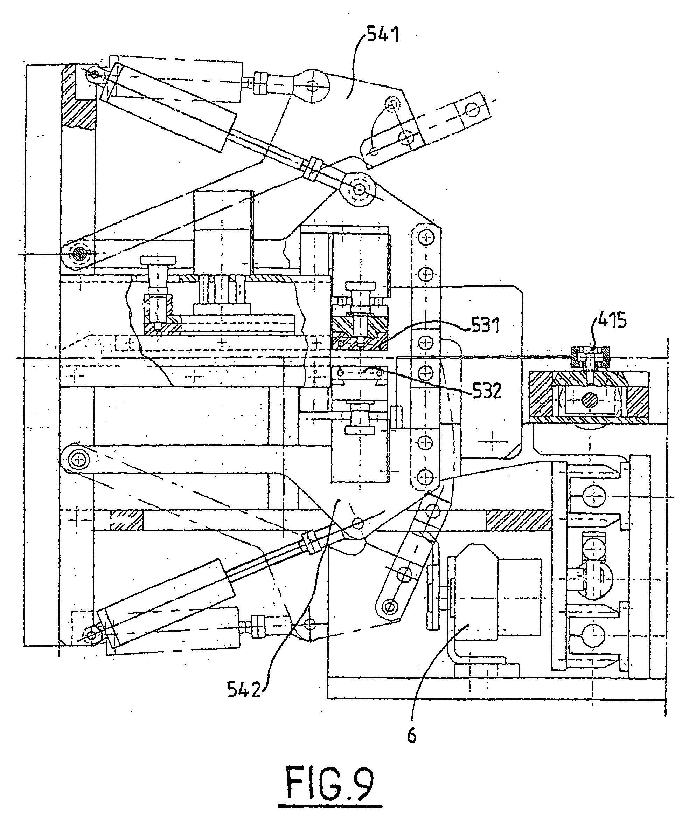

La figure 9 montre plus de détails de ces différents éléments du dispositif d'assemblage en particulier la réalisation des plaques de préhension 531, 532 montrant les canaux à des pressions non référencées, ainsi que les mâchoires d'assemblage 541, 542 en position assemblée en traits pleins et en position écartée en traits interrompus.

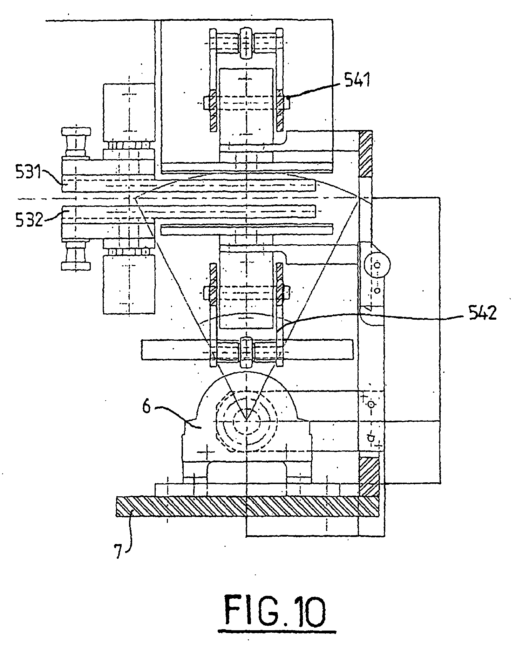

La figure 10 montre de nouveau les différents moyens ci-dessus.

## Revendications

1. Procédé d'assemblage dans une machine de manchonnage de l'extrémité aval EAV d'une gaine G à manchons dévidée d'une bobine (21) qui se termine, à l'extrémité amont EAM de la gaine (G) d'une nouvelle bobine 22, pour réaliser une jonction continue respectant le pas de la succession des manchons sans décalage, la gaine (G) étant encore à l'état plat,
**caractérisé en ce que**
- on coupe l'extrémité aval EAV de la gaine G0 qui se termine suivant une ligne de jonction LJ déterminée par rapport à un manchon M04,
- on installe l'extrémité amont EAM de la gaine nouvelle G1 à côté de l'extrémité aval EAV de la gaine terminée G0,
- on prépare cette extrémité amont EAM en séparant un volet supérieur V1 et un volet inférieur V2 par découpe des deux côtés LCB1, LCB2 de l'extrémité amont EAM,
- on ouvre les volets V1, V2,
- on glisse l'extrémité amont EAM avec ses volets V1, V2 ouverts à cheval sur l'extrémité aval EAV, tenue à plat,
- on positionne l'extrémité amont EAM par rapport à la ligne de jonction LJ à l'extrémité aval EAV pour respecter le pas P des manchons,
- on solidarise les volets V1, V2 à l'extrémité aval EAV.

2. Procédé selon la revendication 1,
**caractérisé en ce qu'**
on coupe les côtés de l'extrémité amont EAM jusqu'à une ligne d'assemblage transversale LA, homologue du point de vue des manchons de la gaine à la ligne de jonction LJ, LA de l'extrémité aval EAV.

3. Procédé selon la revendication 2,
**caractérisé en ce qu'**
on aligne transversalement la ligne d'assemblage LA de l'extrémité amont EAM sur la ligne de jonction LJ de l'extrémité aval EAV et on translate l'extrémité amont EAM (T) pour la faire venir à cheval avec ses deux volets V1, V2 sur l'extrémité aval EAV.

4. Machine de manchonnage pour la mise en oeuvre du procédé selon l'une quelconque des revendications 1 à 3 comprenant :
- un poste de manchonnage (1) pour appliquer des manchons détachés d'une gaine sur des bouteilles,
- une alimentation en manchons (2) sous la forme d'une gaine comprenant :
* un emplacement de bobine (21) avec une bobine à manchons (B1) qui se dévide,
* un emplacement de bobine de rechange (22), avec une bobine (B2) en attente, destinée à être reliée à l'extrémité aval EAV de la bobine qui se dévide, au moment où celle-ci sera terminée,
* une réserve tampon (3) pour permettre la poursuite du fonctionnement du poste de manchonnage 1 pendant l'assemblage de l'extrémité amont EAM et de l'extrémité aval EAV de la gaine de la bobine nouvelle B2 et de la bobine terminée B1,
- un poste d'assemblage 1 pour relier l'extrémité aval EAV à l'extrémité amont EAM
**caractérisée en ce que**
le poste d'assemblage comprend :
- un dispositif de guidage (4) en sortie de poste d'assemblage (2), en amont de la réserve tampon (3), ayant :
* un guide flottant (41) composé d'une plaque (411) tenue par une olive (412),
** la plaque rectangulaire 411 ayant sensiblement la largeur de la gaine (G) à plat,
** cette plaque 411 étant solidaire de l'olive 412 munie de galets 415, 416 et maintenue en flottement entre deux cylindres (42, 43) entraînés à la vitesse de défilement de la gaine (G) ou susceptible d'être arrêtés,
** des galets latéraux (415, 416) pour tenir les côtés de la plaque (411),
** le guide flottant 41 étant logé dans la gaine G qui défile autour de lui, entraînée par les cylindres 42, 43 et les galets (415, 416),
* un capteur repérant la position des manchons sur la gaine (G) pour commander l'arrêt de l'extrémité aval EAV de la gaine dans une position précise par rapport à un manchon,
* le guide flottant 41 tenant à plat l'extrémité aval EAV de la gaine (G) terminée et la bloquant en défilement pendant l'assemblage,
- un dispositif d'assemblage situé en amont du dispositif de guidage (4) comprenant
* un plateau (55) de positionnement de l'extrémité amont EAM, située à côté de la partie d'alignement sur la ligne de défilement de la gaine (G), pour recevoir l'extrémité amont EAM préparée,
* un châssis (51) mobile en translation entre une position alignée sur la ligne de défilement de la gaine (G), définie par le dispositif de guidage et une position latérale de dégagement, au niveau du plateau pour prendre l'extrémité amont EAM positionnée par rapport au plateau (55),
** ce châssis (51) portant deux plaques de préhension 531, 532, commandées pour prendre les volets (V1, V2) de l'extrémité amont EAM et les écarter,
** deux mâchoires 541, 542 de liaison,
** un actionneur pour transférer le châssis 51 entre sa position dégagée EAM et sa position engagée avec l'extrémité amont EAM ouverte venant au-dessus et en dessous de l'extrémité aval EAV, pour rabattre les deux volets V1, V2 contre l'extrémité aval EAV et appliquer les mâchoires 541, 542 de liaison contre les volets V1, V2, pour les fixer contre l'extrémité aval EAV, ainsi que pour commander le mouvement de retour et de dégagement des actionneurs, des mâchoires 541, 542 de liaison et du châssis 51.

## Patentansprüche

1. Verfahren zum Zusammenfügen, in einer Hüllmaschine, des nacheilenden Endes EAV eines von einer Spule (21) abgewickelten, sich erschöpfenden Hüllenschlauchs G mit dem führenden Ende EAM des Schlauchs (G) einer neuen Spule (22), zum Herstellen einer kontinuierlichen, den Abfolgeabstand der Hüllen ohne Versatz einhaltenden Verbindung, wobei der Schlauch (G) sich noch im flachen Zustand befindet, **dadurch gekennzeichnet, dass**
- das nacheilende Ende EAV des sich erschöpfenden Schlauches G0 an einer Verbindungslinie LJ abgeschnitten wird, die in Bezug auf eine Hülle M04 festgelegt ist,
- das führende Ende EAM des neuen Schlauches G1 neben dem nacheilenden Ende EAV des sich erschöpfenden Schlauches G0 installiert wird,
- dieses führende Ende EAV vorbereitet wird durch Trennen eines oberen Flügels V1 und eines unteren Flügels V2 durch Abschneiden der zwei Seiten LCB1, LCB2 des führenden Endes EAM,
- die Flügel V1, V2 geöffnet werden,
- das führende Ende EAM mit seinen geöffneten Flügeln V1, V2 rittlings auf das flach gehaltene nacheilende Ende EAV geschoben wird,
- das führende Ende EAM in Bezug auf die Verbindungslinie LJ am nacheilenden Ende EAV positioniert wird, um den Abstand P der Hüllen einzuhalten,
- die Flügel V1, V2 mit dem nacheilenden Ende EAV verbunden werden.

2. Verfahren nach Anspruch 1, **dadurch gekennzeichnet, dass** die Seiten des führenden Endes EAM bis zu einer Querfügelinie LA abgeschnitten werden, die in Bezug auf die Hüllen des Schlauches der Verbindungslinie LJ, LA des nacheilenden Endes EAV funktionsgleich ist.

3. Verfahren nach Anspruch 2, **dadurch gekennzeichnet, dass** die Fügelinie LA des führenden Endes EAM auf die Verbindungslinie LJ des nacheilenden Endes EAV in Querrichtung ausgerichtet wird und das führende Ende EAM (T) verschoben wird, um es mit seinen zwei Flügeln V1, V2 rittlings am nacheilenden Ende EAV zu platzieren.

4. Hüllmaschine zur Durchführung des Verfahrens nach einem beliebigen der Ansprüche 1 bis 3, mit:
- einer Hüllstation (1) zum Anbringen von von einem Schlauch abgetrennten Hüllen an Flaschen,
- einer Versorgung mit Hüllen (2) in Form eines Schlauches, mit:
* einem Platz für eine Spule (21) mit einer sich abwickelnden Hüllenspule (B1),
* einem Platz für eine Austauschspule (22) mit einer wartenden Spule (B2), die vorgesehen ist, um mit dem nacheilenden Ende EAV der sich abwickelnden Spule in dem Moment verbunden zu werden, wo diese verbraucht ist,
* einem Pufferspeicher (3) zum Ermöglichen des Weiterbetriebs der Hüllstation 1 während des Zusammenfügens des führenden Endes EAM und des nacheilenden Endes EAV der neuen Spule B2 und der verbrauchten Spule B1,
- eine Fügestation 1 zum Verbinden des führenden Endes EAV mit dem nacheilenden Ende EAM,
**dadurch gekennzeichnet, dass** die Fügestation umfasst:
- eine Führungsvorrichtung (4) am Ausgang der Fügestation (2) vor dem Pufferspeicher (3), mit:
* einer schwebenden Führung (41), bestehend aus einer von einer Olive (412) gehaltenen Platte (411) ,
** wobei die rechteckige Platte 411 im Wesentlichen die Breite des Schlauches (G) im flachen Zustand hat,
** diese Platte 411 mit der mit Rollen 415, 416 versehenen Olive 412 fest verbunden und zwischen zwei Zylindern (42, 43) schwebend gehalten ist, die mit der Laufgeschwindigkeit des Schlauches (G) angetrieben sind oder angehalten werden können,
** seitlichen Rollen (415, 416) zum Halten der Ränder der Platte (411),
** wobei die schwebende Führung (41) in der Hülle (G) untergebracht ist, die um sie, angetrieben von den Zylindern (42, 43) und den Rollen (415, 416), läuft,
* einem Aufnehmer, der die Position der Hüllen auf dem Schlauch (G) erfasst, um den Halt des nacheilenden Endes EAV des Schlauches in einer genauen Position in Bezug auf eine Hülle zu steuern,
* wobei die schwebende Führung (41) das nacheilende Ende EAV des verbrauchten Schlauches (G) flach hält und dessen Bewegung während des Zusammenfügens blockiert,
- eine vor der Führungsvorrichtung (4) angeordnete Fügevorrichtung mit:
* einer Platte (SS) zur Positionierung des führenden Endes EAM, die sich auf Seiten des Abschnitts zum Ausrichten auf die Lauflinie des Schlauches (G) befindet, um das vorbereitete führende Ende EAM aufzunehmen,
* einem Chassis (51), das zwischen einer auf die durch die Führungsvorrichtung definierte Lauflinie des Schlauches (G) ausgerichteten Position und einer seitlichen Freigabeposition in Höhe der Platte zum Aufnehmen des in Bezug auf die Platte (55) positionierten führenden Endes EAM in Translation beweglich ist,
** wobei dieses Chassis (51) trägt: zwei Greifplatten 531, 532, die gesteuert sind, um die Flügel (V1, V2) des führenden Endes EAM zu nehmen und sie zu spreizen,
** zwei Verbindungsbacken 541, 542,
** einen Aktuator zum Verschieben des Chassis 51 zwischen seiner Freigabeposition und seiner Position im Eingriff mit dem geöffneten, oberhalb und unterhalb des nacheilenden Endes EAV zu liegen kommenden führenden Ende EAM, zum Anschlagen der zwei Flügel V1, V2 gegen das nacheilende Ende EAV und Drücken der Verbindungsbacken 541, 542 gegen die Flügel V1, V2, um sie an dem nacheilenden Ende EAV zu befestigen sowie zum Steuern der Rückkehr- und Freigabebewegung der Aktuatoren, der Verbindungsbacken 541, 542 und des Chassis 51.

## Claims

1. Process for splicing together, in a sleeving machine, the downstream end EAV of a sleeved roll (6) which is unwinding from a reel (21) that is about to run out, and the upstream end EAM of the roll (6) on a new reel (22), thereby creating a continuous interface that has regard to the pitch at which the sleeves are being deployed, without lagging behind, with the roll (6) still lying flat, said process being **characterised by** the steps of
- cutting the downstream end EAV of the roll G0 that is about to run out, along an interface line LJ determined with respect to a sleeve MO4,
- placing the upstream end EAM of the new roll G1 alongside the downstream end EAV of the spent roll G0,
- preparing said upstream end EAM by separating an upper flap V1 and a lower flap V2, by excising the two sides LCB1, LCB2 of the upstream end EAM,
- opening the flaps V1, V2,
- sliding the upstream end EAM with its open flaps V1, V2 so as to overlap the downstream end EAV, which is kept flat,
- positioning the upstream end EAM with respect to the interface line LJ at the downstream end EAV, having regard to the pitch P of the sleeves,
- joining the flaps V1, V2 to the downstream end EAV so that they are fast therewith.

2. Process according to claim 1,
**characterised by** cutting the sides of the upstream end EAM as far as a transverse splicing line LA, homologous as regards the sleeves on the roll with the interface line LJ, LA of the downstream end EAV.

3. Process according to claim 2,
**characterised by** transversely aligning the splicing line LA of the upstream end EAM over the interface line LJ of the downstream end EAV and translating the upstream end EAM (T) so that with its two flaps V1, V2 it overlaps the upstream end EAV.

4. Sleeving machine for implementing the process according to any of claims 1 to 3, comprising:
- a sleeving station (1) for applying to bottles sleeves that have been removed from a roll,
- a sleeve feeder (2) in the form of a roll comprising:
* a reel location (21) with an unwinding sleeved reel (B1),
* a reserve reel location (22), with a queued reel (B2) designed to be connected to the downstream end (EAV) of the unwinding reel at the instant when the latter runs out,
* a buffer store (3) for allowing the sleeving station (1) to continue to operate during splicing of the upstream end (EAM) and the downstream end (EAV) of the roll of the new reel (B2) and of the spent reel (B1),
- a splicing station (2) for joining the downstream end (EAV) to the upstream end (EAM),
**characterised in that**
the splicing station features:
- a guiding device (4) on the output side of the splicing station (2), upstream of the buffer store (3), having:
* a floating guide (41 ) made up of a plate (411) held by an olive (412),
** the rectangular plate (411) being substantially the width of the flat roll (6),
** said plate (411) being rigidly joined to the olive (412) which is fitted with rollers (415, 416) and kept floating between two cylinders (42, 43) which are driven at the speed at which the roll (6) unfurls or are capable of being halted,
** side rollers (415, 416) for holding the sides of the plate (411),
** the floating guide (41) being housed in the roll (6) which rotates around it, driven by the cylinders (42, 43) and the rollers (415, 416),
* a sensor which detects the position of the sleeves on the roll (6) so as to control when the downstream end (EAV) of the roll is halted in a precise position with respect to a sleeve,
* the floating guide (41) keeping the downstream end (EAV) of the spent roll (6) flat and locking its rotation during the splicing operation,
- an assembly device located upstream of the guiding device (4) and comprising:
* a plate (55) for positioning the upstream end (EAM), located alongside the aligned part on the line of deployment of the roll (6), so as to receive the prepared upstream end (EAM),
* a frame (51) which moves in translation between a position aligned on the line of deployment of the roll (6), said position being defined by the guiding device, and a lateral disengaging position on the plate, to take the upstream end (EAM) positioned with respect to the plate (55),
** said frame (51) bearing two gripper plates (531, 532) which are operated so as to take the flaps (V1, V2) from the upstream end (EAM) and move them apart,
** two connecting jaws (541, 542),
** an operator to transfer the frame (51) between its disengaged position and its engaged position with the open upstream end (EAM) passing above and beneath the downstream end (EAV), so as to fold down the two flaps (V1,V2) against the upstream end (EAM) and press the connecting jaws (541, 542) against the flaps (V1, V2), in order to immobilise them against the downstream end (EAV), as well as to control the return and disengaging movement of the operators, the connecting jaws (541, 542) and the frame (51).
